# EUROPÄISCHE PATENTSCHRIFT

(11) **EP 3 763 551 B1**
(45) Veröffentlichungstag und Bekanntmachung des Hinweises auf die Patenterteilung: **04.05.2022**
(21) Anmeldenummer: 20183262.3
(22) Anmeldetag: 30.06.2020
(51) Int. Cl.: B60C 23/00, A01B 79/00

(54) **VERFAHREN ZUR ANSTEUERUNG EINER REIFENDRUCKREGELANLAGE EINES LANDWIRTSCHAFTLICHEN FAHRZEUGGESPANNS**
METHOD FOR CONTROLLING A TYRE PRESSURE CONTROL SYSTEM OF AN AGRICULTURAL VEHICLE
PROCÉDÉ DE COMMANDE D'UNE INSTALLATION DE RÉGULATION DE PRESSION DES PNEUS D'UN ATTELAGE AGRICOLE

(30) Priorität: 12.07.2019 DE 102019210325
(43) Veröffentlichungstag der Anmeldung: 13.01.2021
(73) Patentinhaber: Deere & Company, Moline, IL 61265 (US)
(72) Erfinder: Buhrke, Frank, 68163 Mannheim (DE)
(74) Vertreter: Dehnhardt, Florian Christopher

(56) Entgegenhaltungen:
- EP-A1- 3 415 345
- DE-A1-102007 035 647
- DE-A1-102011 085 041
- DE-U1-202011 051 292

## Beschreibung

Die Erfindung betrifft ein Verfahren zur Ansteuerung einer Reifendruckregelanlage eines landwirtschaftlichen Fahrzeuggespanns mit einem landwirtschaftlichen Traktor und einem daran angebrachten gezogenen Arbeitsgerät.

Ein derartiges Verfahren für ein geländegängiges Fahrzeug ist beispielsweise aus der DE 20 2011 051 292 U1 bekannt, bei dem von einer Kontrolleinheit anhand einer erfassten Geoposition entschieden wird, ob sich das Fahrzeug gerade im Gelände oder auf einer Straße befindet, um durch Ansteuerung einer Reifendruckregelanlage einen jeweils geeigneten Reifenluftdruck in die Reifen des Fahrzeugs einzusteuern. Das Verfahren trägt dabei dem Umstand Rechnung, dass während eines Geländebetriebs ein zu hoher Reifenluftdruck zu einer übermäßigen Verdichtung des Bodens führt, wohingegen während eines Straßenbetriebs ein zu niedriger Reifenluftdruck ein übermäßiges, den Reifenverschleiß erhöhendes Walken zur Folge hat. Die vorgeschlagene betriebsabhängige Anpassung des Reifenfülldrucks erlaubt es daher, das Risiko eines Fahrzeugbetriebs unter Verwendung eines für eine Gelände- bzw. Straßenfahrt ungeeigneten Reifenluftdrucks maßgeblich zu verringern. Das vorgeschlagene Vorgehen ist jedoch vergleichsweise aufwendig, da nicht nur die Kenntnis der aktuellen Geoposition des Fahrzeugs vorausgesetzt wird, sondern auch deren Abgleich mit für einen Gelände- bzw. Straßenbetrieb relevanten kartografischen Informationen vorzunehmen ist. Das Dokument EP 3 415 345 A1 beschreibt ein bekanntes Verfahren zur Ansteuerung einer Reifendruckregelanlage eines landwirtschaftlichen Fahrzeuggespanns.

Es ist daher Aufgabe der vorliegenden Erfindung, ein hinsichtlich einer Erkennung eines Wechsels zwischen Straßen- und Geländebetrieb vereinfachtes Verfahren der eingangs genannten Art anzugeben.

Diese Aufgabe wird durch ein Verfahren mit den Merkmalen des Patentanspruchs 1 gelöst.

Das Verfahren zur Ansteuerung einer Reifendruckregelanlage eines landwirtschaftlichen Fahrzeuggespanns mit einem landwirtschaftlichen Traktor und einem daran angebrachten gezogenen Arbeitsgerät sieht vor, dass von einer Kontrolleinheit durch Ansteuerung der Reifendruckregelanlage eine Erhöhung bzw. eine Verringerung eines in luftgefüllten Reifen des landwirtschaftlichen Traktors und/oder des Arbeitsgeräts vorliegenden Reifenfülldrucks für den Fall veranlasst wird, dass von der Kontrolleinheit durch Auswertung von auf einen aktuellen Betriebsstatus des Arbeitsgeräts hinweisenden Daten erkannt wird, dass ein Wechsel vom Feld- in den Straßenbetrieb bzw. ein Wechsel vom Straßen- in den Feldbetrieb bevorsteht.

Die auf den aktuellen Betriebsstatus des Arbeitsgeräts hinweisenden Daten können beispielsweise in Form entsprechender Sensordaten an einem zur Steuerung des Arbeitsgeräts vorgesehenen ISOBUS anliegen. Es kann sich aber auch um entsprechende fahrerseitige Bedienbefehle handeln, die über eine in dem landwirtschaftlichen Traktor angeordnete Nutzerschnittstelle manuell eingegeben werden.

Auf diese Weise wird eine von der Kenntnis der aktuellen geografischen Position des landwirtschaftlichen Fahrzeuggespanns bzw. kartografischer Informationen unabhängige Erkennung eines beabsichtigten Wechsels zwischen Feld- und Straßenbetrieb ermöglicht. Das erfindungsgemäße Verfahren lässt sich daher mit vergleichsweise geringem Aufwand verwirklichen.

Üblicherweise ist die Reifendruckregelanlage Bestandteil des landwirtschaftlichen Traktors, wobei diese der Druckbeaufschlagung der luftgefüllten Reifen sowohl des landwirtschaftlichen Traktors wie auch des gezogenen Arbeitsgeräts dienen kann. Alternativ ist dem Arbeitsgerät eine eigene Reifendruckregelanlage zugeordnet, die sich insbesondere über den ISOBUS von Seiten der Kontrolleinheit des landwirtschaftlichen Traktors ansteuern lässt.

Vorteilhafte Weiterbildungen des erfindungsgemäßen Verfahrens gehen aus den Unteransprüchen hervor.

Vorzugsweise geben die Daten einen aktuellen Füllstand eines in einem Tank des Arbeitsgeräts bevorrateten und mittels des Arbeitsgeräts ausbringbaren Agrarguts wieder. So weist ein Füllstand der Jauche im Tank, der einen vorgegebenen Mindestwert unterschreitet, auf ein bevorstehendes Verlassen des Felds, mithin auf die Beendigung des Feldbetriebs und damit auf den bevorstehenden Beginn eines Straßenbetriebs hin. Der Füllstand wird beispielsweise mittels eines in dem Tank angeordneten Füllstandsensors erfasst und in Form entsprechender Sensordaten über den ISOBUS an die Kontrolleinheit des landwirtschaftlichen Traktors übermittelt. Bei dem Agrargut kann es sich unter anderem um Saatgut, Dünger in Form eines Granulats, flüssiges Spritzmittel zur Pflanzenbehandlung bzw. Unkrautvernichtung, Jauche oder dergleichen handeln. Dementsprechend ist das Arbeitsgerät als Sämaschine, Düngerstreuer, Spritzgerät oder Güllefass ausgebildet.

Im Falle eines als Ladewagen ausgebildeten Arbeitsgeräts ist auch der umgekehrte Fall denkbar; hier ist bei Erkennung einer vollständigen Beladung mit Erntegut mit einem Verlassen des Felds sowie der Aufnahme einer nachfolgenden Straßenfahrt zum Zwecke des Abtransports zu rechnen.

Des Weiteren besteht die Möglichkeit, dass die Daten eine Information hinsichtlich einer aktuellen Betriebsstellung einer von dem Arbeitsgerät umfassten Arbeitseinrichtung wiedergeben. Eine derartige Arbeitseinrichtung kann beispielsweise durch ein von einem Spritzgerät umfasstes klappbares Spritzgestänge gebildet sein, an dem eine Vielzahl von Sprühdüsen zur Applikation eines flüssigen Spritzmittels angeordnet ist. Ein Ausklappen des Spritzgestänges weist hierbei verlässlich auf einen bevorstehenden Feldbetrieb hin, wohingegen ein Einklappen üblicherweise kurz vor Aufnahme eines Straßenbetriebs erfolgt. Die jeweilige Betriebsstellung kann von der Kontrolleinheit aufgrund eines entsprechenden fahrerseitigen Bedienbefehls über die in dem landwirtschaftlichen Traktor angeordnete Nutzerschnittstelle erkannt werden. Je nachdem, ob das Spritzgestänge ein- oder ausgeklappt wird, wird von der Kontrolleinheit durch Ansteuerung der Reifendruckregelanlage eine entsprechende Erhöhung oder Verringerung des Reifenfülldrucks veranlasst.

Um dem Zeitbedarf für eine von der Reifendruckregelanlage auszuführende Reifendruckanpassung Rechnung zu tragen, ist es von Vorteil, wenn von der Kontrolleinheit bei einem Wechsel vom Feld- in den Straßenbetrieb hinsichtlich des Einleitungszeitpunkts einer Reifenfülldruckerhöhung kartografische Informationen eines vorausliegenden Transportwegs einbezogen werden. Diese können von der Kontrolleinheit aus einer ermittelten aktuellen geografischen Position des landwirtschaftlichen Fahrzeuggespanns durch Vergleich mit einem kartografisch erfassten Verlauf des Transportwegs gewonnen werden. Die Erhöhung des Reifenfülldrucks auf den für den Straßenbetrieb vorgesehenen Wert wird von der Kontrolleinheit dann derart rechtzeitig initiiert, dass der Reifendruckregelvorgang bei Erreichen des Transportwegs abgeschlossen ist. Hierdurch ist eine unterbrechungsfreie Aufnahme des Straßenbetriebs gewährleistet. Eine derartige vorausschauende Initiierung des Reifendruckregelvorgangs kann auf eine Erhöhung des Reifenfülldrucks beschränkt bleiben, da die Füllzeiten der Reifendruckregelanlage konstruktionsbedingt meist ungleich höher sind als die Ablasszeiten im Falle einer Reifenfülldruckverringerung.

Die vorstehenden Betrachtungen beziehen sich hauptsächlich auf Kriterien, aus denen sich die Notwendigkeit einer Anpassung des Reifenfülldrucks ergibt. Bei der eigentlichen Bemessung des Umfangs der insofern durchzuführenden Reifenfülldruckerhöhung bzw. Reifenfülldruckverringerung kann von der Kontrolleinheit eine seitens des Arbeitsgeräts auf den landwirtschaftlichen Traktor ausgeübte Stützlast und/oder eine an dem Arbeitsgerät auftretende Radaufstandskraft berücksichtigt werden. Die Stützlast wird hierbei typischerweise über ein Kupplungsmaul im Heckbereich des landwirtschaftlichen Traktors ausgeübt, an dem das Arbeitsgerät mittels einer Deichsel lösbar angebracht ist. Die Stützlast führt zu einer entsprechenden Veränderung der Radaufstandskräfte insbesondere an einer Hinterachse des landwirtschaftlichen Traktors und ist bei der Bemessung eines jeweils einzusteuernden Reifenfülldrucks entsprechend zu berücksichtigen. Die auf den landwirtschaftlichen Traktor ausgeübte Stützlast wie auch die Radaufstandskraft am Arbeitsgerät hängt insbesondere maßgeblich vom Füllstand eines auszubringenden und in einem zugehörigen Tank bevorrateten Agrarguts ab und kann durch Auswertung der Sensordaten eines Füllstandsensors abgeschätzt werden. Ungeachtet dessen ist es auch denkbar, die Stützlast wie auch die Radaufstandskraft auf Seiten des Arbeitsgeräts mittels entsprechender Kraftsensoren oder dergleichen zu ermitteln und der Kontrolleinheit gemeinsam mit Angaben hinsichtlich des verwendeten Reifenmodells bzw. -typs über den ISOBUS mitzuteilen. Letztere haben maßgeblichen Einfluss auf den zur Erzielung einer bestimmten Reifenaufstandsfläche am Arbeitsgerät einzusteuernden Reifenfülldruck. Anstelle einer Übertragung über den ISOBUS besteht auch die Möglichkeit, dass die das Reifenmodell bzw. den Reifentyp betreffenden Angaben in einer der Kontrolleinheit zugeordneten Speichereinheit abgelegt sind und bei Herstellung der ISOBUS-Verbindung durch Identifizierung des jeweiligen Arbeitsgeräts automatisiert aus dieser abgerufen und der Anpassung des Reifenfülldrucks zugrunde gelegt werden. Mit Bezug auf den landwirtschaftlichen Traktor kann die Bestimmung des einzusteuernden Reifenfülldrucks unter zusätzlicher Berücksichtigung eines gemäß DE 10 2017 205 827 A1 ermittelten Ballastierungsvorschlags erfolgen. Hierbei kann auch ein sich aus dem jeweiligen Füllstand des Arbeitsgeräts ergebender Zugkraftbedarf zum Zwecke der kontinuierlichen Anpassung des Reifenfülldrucks am landwirtschaftlichen Traktor einbezogen werden.

Das erfindungsgemäße Verfahren zur Ansteuerung einer Reifendruckregelanlage wird im Folgenden anhand der beigefügten Zeichnungen näher erläutert. Hierbei bezeichnen übereinstimmende Bezugszeichen baulich identische oder bezüglich ihrer Funktion vergleichbare Komponenten. Es zeigen:
- Fig. 1: ein landwirtschaftliches Fahrzeuggespann mit einem landwirtschaftlichen Traktor und einem als Güllefass ausgebildeten Arbeitsgerät, und
- Fig. 2: ein landwirtschaftliches Fahrzeuggespann mit einem landwirtschaftlichen Traktor und einem als Spitzgerät ausgebildeten Arbeitsgerät.

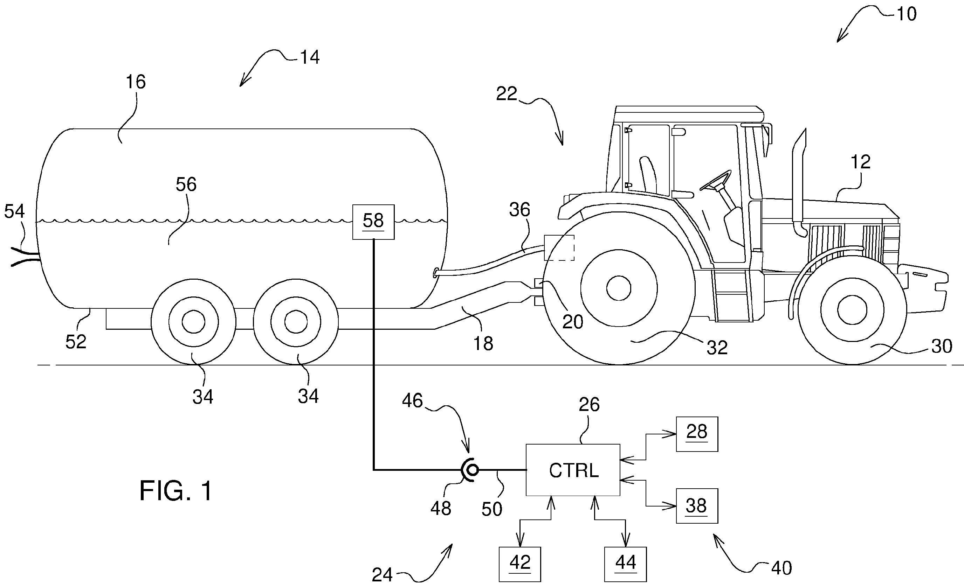

Fig. 1 veranschaulicht die Funktionsweise eines ersten Ausführungsbeispiels des erfindungsgemäßen Verfahrens für ein landwirtschaftliches Fahrzeuggespann 10 mit einem landwirtschaftlichen Traktor 12 und einem daran angebrachten gezogenen Arbeitsgerät 14 in Gestalt eines Güllefasses 16. Das Güllefass 16 ist mittels einer Deichsel 18 an einem Kupplungsmaul 20 im Heckbereich 22 des landwirtschaftlichen Traktors 12 lösbar angebracht.

Eine dem landwirtschaftlichen Traktor 12 zugeordnete Anordnung 24 dient der Ausführung des erfindungsgemäßen Verfahrens. Die Anordnung 24 umfasst eine mikroprozessorgesteuerte Kontrolleinheit 26 sowie eine Reifendruckregelanlage 28 herkömmlicher Bauart, die der Einsteuerung eines radindividuellen Reifenfülldrucks in die luftgefüllten Reifen 30, 32, 34 des landwirtschaftlichen Traktors 12 sowie des Güllefasses 16 dient, von denen aus Gründen der Darstellung lediglich die dem Betrachter zugewandten zu sehen sind. Die Reifen 34 des Güllefasses 16 kommunizieren hierzu über einen im Heckbereich 22 des landwirtschaftlichen Traktors 12 anschließbaren Druckschlauch 36 mit der Reifendruckregelanlage 28.

Des Weiteren ist eine als berührungsempfindliche Anzeigeeinheit 38 ausgebildete Nutzerschnittstelle 40, ein GPS-Empfänger 42 zur Ermittlung einer aktuellen geografischen Position des landwirtschaftlichen Fahrzeuggespanns 10, sowie eine Speichereinheit 44 mit darin hinterlegten kartografischen Informationen hinsichtlich eines Verlaufs von Transportwegen und dergleichen vorhanden.

Beispielsgemäß handelt es sich bei dem Güllefass 16 um ein ISOBUS-fähiges Arbeitsgerät 14. Eine von der Anordnung 24 umfasste Schnittstelle 46 in Gestalt eines genormten ISOBUS-Steckers 48 stellt hierbei eine Datenaustauschverbindung mit der Kontrolleinheit 26 her. Am ISOBUS 50 liegen unter anderem Daten eines aktuellen Füllstands der in einem Tank 52 des Güllefasses 16 bevorrateten und mittels einer Flächendüse 54 ausbringbaren Jauche 56 wieder. Der Füllstand wird mittels eines in dem Tank 52 angeordneten Füllstandsensors 58 erfasst und in Form entsprechender Sensordaten über den ISOBUS 50 an die Kontrolleinheit 26 des landwirtschaftlichen Traktors 12 übermittelt, sodass diese einen unmittelbaren Hinweis auf den aktuellen Betriebsstatus des Güllefasses 16 erhält.

Abweichend von der Darstellung in Fig. 1 kann dem Güllefass 16 auch eine eigene Reifendruckregelanlage 28 zugeordnet sein.

Diese lässt sich dann bevorzugt über den ISOBUS 50 von Seiten der Kontrolleinheit 26 des landwirtschaftlichen Traktors 12 ansteuern.

Wird von der Kontrolleinheit 26 durch Auswertung der Sensordaten erkannt, dass der Füllstand der Jauche 56 im Tank 52 einen vorgegebenen Mindestwert unterschreitet, so weist dies auf ein bevorstehendes Verlassen des Felds, mithin auf die Beendigung des Feldbetriebs und damit auf den bevorstehenden Beginn eines Straßenbetriebs hin. In einem solchen Fall wird von der Kontrolleinheit 26 durch Ansteuerung der Reifendruckregelanlage 28 eine Erhöhung des Reifenfülldrucks in den Reifen 30, 32, 34 sowohl des landwirtschaftlichen Traktors 12 wie auch des Güllefasses 16 veranlasst. Der vorgegebene Mindestwert entspricht hierbei einem leeren oder nahezu leeren Tank 52.

Um dem Zeitbedarf für eine von der Reifendruckregelanlage 28 auszuführende Reifendruckanpassung Rechnung zu tragen, werden von der Kontrolleinheit 26 beim Wechsel vom Feld- in den Straßenbetrieb hinsichtlich des Einleitungszeitpunkts der Reifenfülldruckerhöhung kartografische Angaben eines vorausliegenden Transportwegs einbezogen. Diese werden von der Kontrolleinheit 26 aus der mittels des GPS-Empfängers 42 ermittelten aktuellen geografischen Position des landwirtschaftlichen Fahrzeuggespanns 10 durch Vergleich mit den in der Speichereinheit 44 hinterlegten kartografischen Informationen gewonnen. Die Erhöhung des Reifenfülldrucks auf den für den Straßenbetrieb vorgesehenen Wert wird von der Kontrolleinheit 26 dann derart rechtzeitig initiiert, dass der Reifendruckregelvorgang bei Erreichen des Transportwegs abgeschlossen ist. Hierdurch ist eine unterbrechungsfreie Aufnahme des Straßenbetriebs gewährleistet.

Bei der Bemessung des Umfangs der Reifenfülldruckerhöhung wird von der Kontrolleinheit 26 eine seitens des Güllefasses 16 auf den landwirtschaftlichen Traktor 12 ausgeübte Stützlast und/oder eine an dem Arbeitsgerät 14 auftretende Radaufstandskraft berücksichtigt. Beide Größen hängen vom aktuellen Füllstand des Tanks 52 ab. Im vorliegenden Fall ist zum Ende des Feldbetriebs von einem zumindest im Wesentlichen leeren Tank 52 auszugehen, sodass bei der Bestimmung der Stützkraft bzw. Radaufstandskraft das Leergewicht des Güllefasses 16 anzusetzen ist. Mit Bezug auf den landwirtschaftlichen Traktor 12 kann die Bestimmung des einzusteuernden Reifenfülldrucks dann unter zusätzlicher Berücksichtigung eines gemäß DE 10 2017 205 827 A1 ermittelten Ballastierungsvorschlags erfolgen.

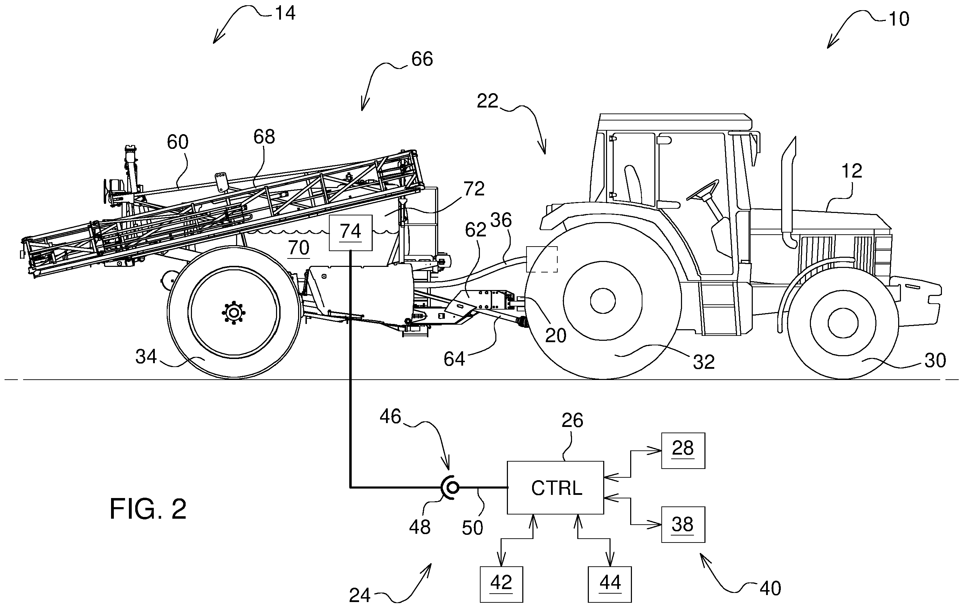

Fig. 2 veranschaulicht die Funktionsweise eines zweiten Ausführungsbeispiels des erfindungsgemäßen Verfahrens, wobei es sich bei dem Arbeitsgerät 14 nunmehr um ein Spritzgerät 60 handelt, das einerseits mittels einer Deichsel 62 am Kupplungsmaul 20 im Heckbereich 22 des landwirtschaftlichen Traktors 12 lösbar angebracht ist und andererseits antriebsseitig über eine Zapfwelle 64 mit diesem in Verbindung steht.

Der landwirtschaftliche Traktor 12 wie auch die von diesem umfasste Anordnung 24 sind baulich gegenüber dem ersten Ausführungsbeispiel unverändert. Das Spritzgerät 60 weist jedoch eine Arbeitseinrichtung 66 in Gestalt eines klappbaren Spritzgestänges 68 auf, an dem eine Vielzahl von Sprühdüsen 70 zur Applikation eines flüssigen Spritzmittels 70 angeordnet ist, das in einem Spritzmitteltank 72 bevorratet ist. Ein Ausklappen des Spritzgestänges 68 weist dabei auf einen bevorstehenden Feldbetrieb hin, wohingegen ein Einklappen üblicherweise kurz vor Aufnahme des Straßenbetriebs erfolgt. Die Betriebsstellung des Spritzgestänges 68 liefert damit neben dem mittels eines Füllstandsensors 74 überwachten Füllstand des Spritzmitteltanks 72 einen eindeutigen Hinweis auf den aktuellen Betriebsstatus des Spritzgeräts 60. Die jeweilige Betriebsstellung wird von der Kontrolleinheit 26 aufgrund eines entsprechenden fahrerseitigen Bedienbefehls über die in dem landwirtschaftlichen Traktor 12 angeordnete Nutzerschnittstelle 40 erkannt. Je nachdem, ob das Spritzgestänge 68 ein- oder ausgeklappt wird, wird von der Kontrolleinheit 26 durch Ansteuerung der Reifendruckregelanlage 28 zeitgleich eine entsprechende Erhöhung oder Verringerung des Reifenfülldrucks veranlasst.

Bezüglich der Einbeziehung des Füllstands des Spritzmitteltanks 72 bei der Ansteuerung der Reifendruckregelanlage 28 sei im Übrigen auf die Ausführungen im Falle des ersten Ausführungsbeispiels analog verwiesen.

## Patentansprüche

1. Verfahren zur Ansteuerung einer Reifendruckregelanlage eines landwirtschaftlichen Fahrzeuggespanns mit einem landwirtschaftlichen Traktor (12) und einem daran angebrachten gezogenen Arbeitsgerät (14), bei dem von einer Kontrolleinheit (26) durch Ansteuerung der Reifendruckregelanlage (28) eine Erhöhung bzw. eine Verringerung eines in luftgefüllten Reifen (30, 32, 34) des landwirtschaftlichen Traktors (12) und/oder des Arbeitsgeräts (14) vorliegenden Reifenfülldrucks für den Fall veranlasst wird, dass von der Kontrolleinheit (26) durch Auswertung von auf einen aktuellen Betriebsstatus des Arbeitsgeräts (14) hinweisenden Daten erkannt wird, dass ein Wechsel vom Feld- in den Straßenbetrieb bzw. ein Wechsel vom Straßen- in den Feldbetrieb bevorsteht.

2. Verfahren nach Anspruch 1, **dadurch gekennzeichnet, dass** die Daten einen aktuellen Füllstand eines in einem Tank (52, 72) des Arbeitsgeräts (14) bevorrateten und mittels des Arbeitsgeräts (14) ausbringbaren Agrarguts (56, 70) wiedergeben.

3. Verfahren nach Anspruch 1 oder 2, **dadurch gekennzeichnet, dass** die Daten eine Information hinsichtlich einer aktuellen Betriebsstellung einer von dem Arbeitsgerät (14) umfassten Arbeitseinrichtung (66) wiedergeben.

4. Verfahren nach wenigstens einem der Ansprüche 1 bis 3, **dadurch gekennzeichnet, dass** von der Kontrolleinheit (26) bei einem Wechsel vom Feld- in den Straßenbetrieb hinsichtlich des Einleitungszeitpunkts einer Reifenfülldruckerhöhung kartografische Informationen eines vorausliegenden Transportwegs einbezogen werden.

5. Verfahren nach wenigstens einem der Ansprüche 1 bis 4, **dadurch gekennzeichnet, dass** bei der Bemessung des Umfangs der Reifenfülldruckerhöhung bzw. Reifenfülldruckverringerung von der Kontrolleinheit (26) eine seitens des Arbeitsgeräts (14) auf den landwirtschaftlichen Traktor (12) ausgeübte Stützlast und/oder eine an dem Arbeitsgerät (14) auftretende Radaufstandskraft berücksichtigt wird.

## Claims

1. Method for actuating a tyre-pressure regulating system of an agricultural vehicle combination comprising an agricultural tractor (12) and a towed implement (14) attached thereto, in which an increase or a reduction in a tyre inflation pressure present in air-filled tyres (30, 32, 34) of the agricultural tractor (12) and/or the implement (14) is initiated by a control unit (26) by actuation of the tyre-pressure regulating system (28) in the event that the control unit (26) identifies, by evaluation of data indicating a current operating status of the implement (14), that a change from field to road operation, or a change from road to field operation, is imminent.

2. Method according to Claim 1, **characterized in that** the data represent the current fill level of an agricultural material (56, 70) that is stored in a tank (52, 72) of the implement (14) and that can be applied by means of the implement (14).

3. Method according to Claim 1 or 2, **characterized in that** the data represent information regarding a current operating position of an item of work equipment (66) comprised by the implement (14).

4. Method according to at least one of Claims 1 to 3, **characterized in that** the control unit (26) includes cartographic information from a preceding transport route upon a change from field to road operation, in respect of the time of initiation of a tyre inflation pressure increase.

5. Method according to at least one of Claim 1 to 4, **characterized in that**, in the calculation of the extent of the increase or decrease in tyre inflation pressure, the control unit (26) takes into account a drawbar load exerted upon the agricultural tractor (12) by the implement (14) and/or a wheel contact force on the implement (14).

## Revendications

1. Procédé de commande d'un système de régulation de pression de pneumatique d'un tandem de véhicules agricole comprenant un tracteur agricole (12) et une unité de travail tractée (14) attachée à celui-ci, procédé dans lequel une unité de commande (26) ordonne, par commande du système de régulation de pression de pneumatiques (28), une augmentation ou une diminution d'une pression de remplissage de pneumatiques présente dans des pneumatiques (30, 32, 34), remplis d'air, du tracteur agricole (12) et/ou de l'unité de travail (14) dans le cas où l'unité de commande (26) détecte, par évaluation de données indiquant l'état de fonctionnement actuel de l'outil (14) et où un passage du fonctionnement agraire en fonctionnement routier ou du fonctionnement routier en fonctionnement agraire est imminent.

2. Procédé selon la revendication 1, **caractérisé en ce que** les données reflètent un niveau de remplissage actuel d'un produit agricole (56, 70) stocké dans un réservoir (52, 72) de l'unité de travail (14) et pouvant être épandu au moyen de l'unité de travail (14) .

3. Procédé selon la revendication 1 ou 2, **caractérisé en ce que** les données reflètent une information concernant une position de fonctionnement actuelle d'un dispositif de travail (66) inclus dans l'unité de travail (14).

4. Procédé selon l'une au moins des revendications 1 à 3, **caractérisé en ce que** des informations cartographiques d'un chemin de transport à venir sont prises en compte par l'unité de commande (26), en ce qui concerne l'instant d'amorçage d'une augmentation de pression de remplissage de pneumatique, lors d'un passage d'un fonctionnement agraire en fonctionnement routier.

5. Procédé selon l'une au moins des revendications 1 à 4, **caractérisé en ce qu'**une charge d'appui exercée par l'unité de travail (14) sur le tracteur agricole (12) et/ou une force de contact de roues se produisant sur l'unité de travail (14) est prise en compte par l'unité de commande (26) lors de la détermination de l'étendue de l'augmentation de pression de remplissage de pneumatique ou de la diminution de pression de remplissage de pneumatique.
